# FASCICULE DE BREVET EUROPEEN

(11) **EP 0 814 557 B1**
(45) Date de publication et mention de la délivrance du brevet: **25.08.2004**
(21) Numéro de dépôt: 97401386.4
(22) Date de dépôt: 17.06.1997
(51) Int. Cl.: H02J 7/02, H02J 5/00

(54) **Dispositif pour recharger les batteries d'accumulateurs d'un véhicule électrique**
Gerät zur Ladung der Batterien eines elektrischen Fahrzeugs
Device for recharging the batteries of an electric vehicle

(30) Priorité: 19.06.1996 FR 9607639
(43) Date de publication de la demande: 29.12.1997
(73) Titulaire: AUTOMOBILES PEUGEOT, 75116 Paris (FR); AUTOMOBILES CITROEN, 92200 Neuilly-sur-Seine (FR)
(72) Inventeur: Bertrand Belanger, Pascal, 75009 Paris (FR); Chery, François, 92400 Courbevoie (FR)
(74) Mandataire: Thinat, Michel

(56) Documents cités:
- EP-A- 0 586 315
- US-A- 3 938 018
- US-A- 4 347 472

## Description

La présente invention concerne un dispositif pour recharger les batteries d'accumulateurs d'un véhicule électrique.

On connaît un tel dispositif comprenant un boîtier fixe d'une station fixe à plusieurs boîtiers fixes, le boîtier fixe enfermant un inducteur relié à un générateur haute fréquence alimenté par le secteur, et un boîtier fixé sur le véhicule contenant un récepteur d'énergie pouvant être placé au-dessus de l'inducteur de façon à permettre un transfert d'énergie inductive entre l'inducteur et le récepteur et à permettre ainsi la recharge des batteries du véhicule (voir par exemple US-A-4 347 472).

Cependant, ce genre de dispositif connu implique l'utilisation d'inducteurs fixes d'une station fixe, ce qui entraîne un certain nombre de contraintes, et essentiellement l'obligation de se rendre à certains endroits bien précis pour recharger les batteries d'un véhicule électrique. En fait, ce dispositif de rechargement connu est surtout valable dans le cas d'une flotte de véhicules ou d'un système de location de véhicules.

Dans le cadre d'une utilisation privée, il est nécessaire de recharger les batteries du véhicule électrique en de nombreux endroits, selon les parcours effectués par le véhicule.

L'invention a pour but de résoudre le problème ci-dessus en proposant un dispositif pour recharger les batteries d'accumulateurs d'un véhicule électrique, comprenant un boîtier placé sur le sol enfermant un inducteur relié à un générateur haute fréquence et un récepteur d'énergie fixé au véhicule et pouvant être placé au-dessus de l'inducteur de façon à permettre un transfert d'énergie inductive entre eux, le boîtier enfermant l'inducteur étant portatif caractérisé en ce que le boîtier enfermant l'inducteur comprend des moyens de guidage du véhicule pour placer le récepteur au-dessus de l'inducteur.

De préférence, les moyens de guidage comprennent une perche inclinable visible par le conducteur, reliée à un interrupteur du boîtier enfermant l'inducteur et déplaçable, sous la poussée du véhicule, entre une première position dans laquelle l'interrupteur coupe le transfert d'énergie inductive nécessaire pour recharger les batteries et une deuxième position dans laquelle l'interrupteur autorise le transfert d'énergie inductive pour recharger les batteries.

La perche est équipée à son extrémité libre supérieure d'un voyant lumineux, tel qu'une diode, pouvant s'allumer lors du basculement de l'interrupteur de la première position à la deuxième position pour faciliter le guidage du véhicule.

La perche est démontable.

Les moyens de guidage comprennent également au moins un feu de guidage fixé au boîtier enfermant l'inducteur, en avant de la perche de guidage.

Le véhicule électrique comprend un témoin, tel qu'un voyant lumineux, indiquant que le degré de recouvrement de l'inducteur et du récepteur est suffisant.

Le boîtier enfermant l'inducteur est fixé amoviblement sur le sol et, de préférence, les moyens de fixation de ce boîtier comprennent une vis s'engageant dans une cheville placée dans le sol et éventuellement un cache antivol solidaire du boîtier et recouvrant la vis de fixation.

Le boîtier enfermant l'inducteur est équipé d'un câble d'alimentation électrique reliant le générateur haute fréquence au secteur d'alimentation et comprend un espace de rangement du câble d'alimentation.

Enfin, le boîtier comprend des moyens de refroidissement, tels que des ailettes.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est une vue éclatée du boîtier portatif de l'invention faisant partie d'un dispositif pour recharger les batteries d'accumulateurs d'un véhicule électrique.

La figure 2 est une vue en perspective du boîtier portatif en position assemblée.

La figure 3 est une vue montrant le transport du boîtier portatif par une personne.

La figure 4 est une vue de côté montrant le guidage du véhicule électrique relativement au boîtier portatif placé sur le sol.

La figure 5 montre le véhicule électrique dont le récepteur d'énergie est correctement placé au-dessus de l'inducteur du boîtier portatif placé sur le sol.

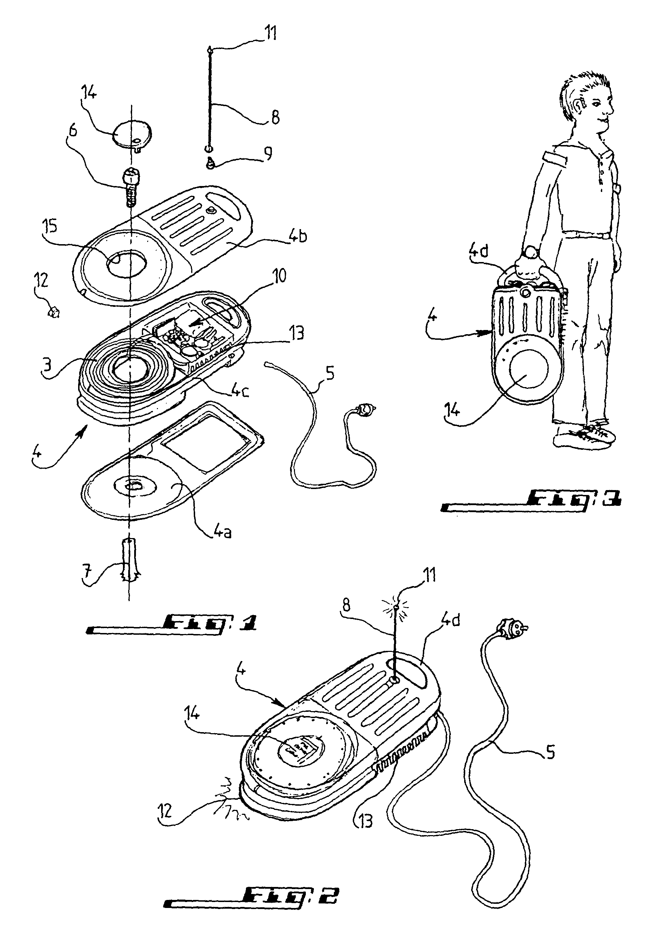

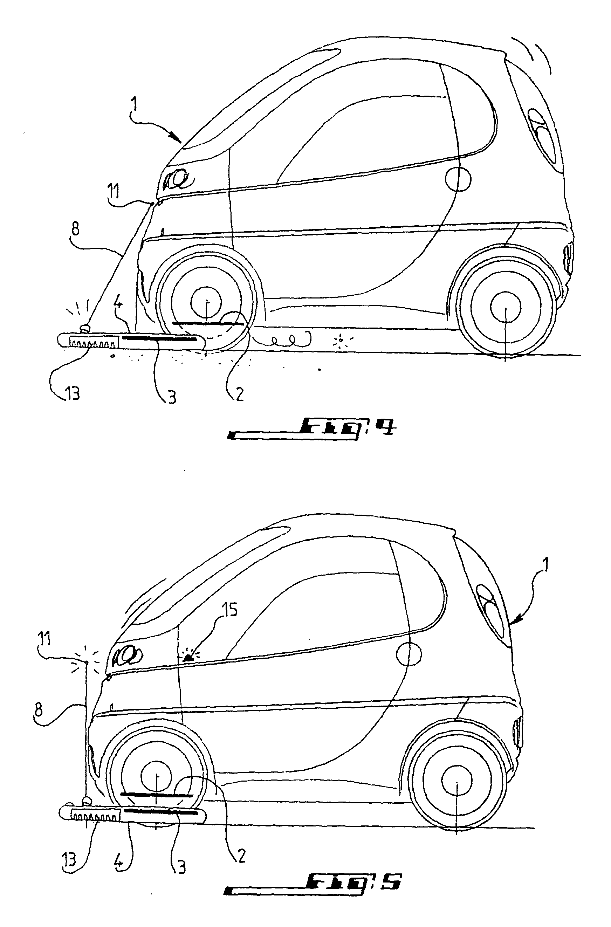

En se reportant aux figures 1 à 5, la référence 1 désigne un véhicule électrique sur lequel est monté à demeure un récepteur d'énergie 2 de préférence réalisé sous la forme d'un bobinage plan en spirale et pouvant être couplé électromagnétiquement à un inducteur 3 de préférence réalisé sous la forme d'un bobinage plan en spirale enfermé dans un boîtier 4 placé sur le sol, pour permettre le rechargement des batteries d'accumulateurs du véhicule 1. Comme cela est connu en soi, le récepteur d'énergie 2 est au moins en partie logé dans un boîtier diélectrique solidaire de la structure du véhicule 1 et est relié aux batteries de celui-ci par l'intermédiaire d'un circuit redresseur logé dans le véhicule.

L'inducteur 3 est relié à un générateur haute fréquence logé dans le boîtier 4 comme on le verra ultérieurement et au secteur d'alimentation électrique par l'intermédiaire d'un câble d'alimentation 5.

Lorsque le récepteur 2 recouvre correctement l'inducteur 3 en étant séparés l'un de l'autre d'une distance relativement courte de l'ordre de quelques centimètres, le récepteur 2 est couplé électromagnétiquement dans l'air à l'inducteur 3 de sorte qu'il intercepte le champ électromagnétique émis par l'inducteur 3 et la force électromotrice ainsi induite dans le récepteur 2 permet d'établir un courant de charge des batteries d'accumulateurs par l'intermédiaire d'un régulateur de charge (non représenté) relié entre le circuit redresseur et les batteries d'accumulateurs.

Selon l'invention, le boîtier 4 enfermant l'inducteur 3 est portatif et peut être éventuellement fixé sur le sol, à l'emplacement de parking du véhicule électrique 1, à l'aide d'une vis centrale de fixation 6 s'engageant dans une cheville anti-traction 7 implantée dans le sol de façon à solidariser au sol une plaque 4a constituant le fond du boîtier 4.

Le boîtier 4 comprend des moyens de guidage du véhicule 1 pour faciliter le placement du récepteur 2 au-dessus de l'inducteur 3.

Ces moyens de guidage comprennent une perche inclinable 8 visible par le conducteur du véhicule 1, fixée amoviblement à un interrupteur 9 fixé sur le capot 4b du boîtier 4 et pouvant occuper soit une position de mise hors service d'un boîtier électronique 10 comprenant le générateur haute fréquence, de façon qu'aucun champ électromagnétique ne soit émis par l'inducteur 3, soit une position de mise en service du boîtier électronique 10 de façon que l'inducteur 3 puisse émettre le champ électromagnétique permettant la recharge des batteries d'accumulateurs du véhicule 1. Le boîtier électronique 10 et l'inducteur 3 sont logés dans le carter 4c du boîtier 4.

La perche 8 est équipée à son extrémité libre supérieure d'un voyant lumineux 11, tel qu'une diode électroluminescente, pouvant s'allumer lors du basculement de l'interrupteur 9 de sa position de mise hors service du boîtier électronique 10 à sa position de mise en service de celui-ci.

Les moyens de guidage peuvent également comporter au moins un feu de guidage 12 fixé au carter 4c du boîtier 4 en avant de celui-ci, en tout cas à l'opposé de l'interrupteur 9, de façon à être visible par le conducteur du véhicule électrique 1 lors de sa manoeuvre d'approche du boîtier 4.

Le câble d'alimentation 5 permettant de relier le générateur haute fréquence au secteur d'alimentation est logé dans un espace de rangement approprié du boîtier 4 qui comprend également des moyens de refroidissement, tels que des ailettes 13 de refroidissement par convection naturelle.

Le cas échéant, afin de garantir l'inviolabilité du boîtier 4 fixé sur le sol, un cache antivol 14 est fixé dans une ouverture de forme conjuguée 15 du capot 4b de façon à empêcher l'accès à la vis de fixation 6.

L'utilisation du dispositif de l'invention ressort déjà de la description qui en a été faite ci-dessus et va être maintenant expliquée.

Tout d'abord, le conducteur du véhicule 1 installe le boîtier portatif 4 sur l'emplacement de parking du véhicule et, éventuellement, fixe ce boîtier sur le sol à l'aide de la vis centrale 6, puis fixe ensuite le cache antivol 14 au capot 4b du boîtier 4. Le conducteur branche ensuite le câble d'alimentation 5 sur le secteur et installe la perche 8 sur l'interrupteur 9 encastré dans le capot 4b.

Ensuite, le conducteur avance son véhicule lentement vers le boîtier de recharge 4 en positionnant déjà le véhicule 1 relativement au boîtier 4 à l'aide du feu de guidage 12. Lorsque le véhicule 1 avance au-dessus du boîtier 4, il pousse la perche 8 de façon à basculer l'interrupteur 9 de sa position dans laquelle il coupe le transfert d'énergie inductive nécessaire pour recharger les batteries d'accumulateurs du véhicule à sa position dans laquelle il autorise ce transfert d'énergie inductive rechargeant les batteries d'accumulateurs. Lors de ce basculement, la diode électroluminescente 11, par exemple de couleur rouge, s'allume pour faciliter le guidage du véhicule. Le générateur haute fréquence étant alors mis en marche, crée le champ électromagnétique émis par l'inducteur 3 et intercepté par le récepteur 2. Dès qu'une partie suffisante d'énergie est captée par le récepteur 2, c'est-à-dire dès que le degré de recouvrement de l'inducteur 3 et du récepteur 2 est suffisant, un témoin 15 du véhicule 1, tel que par exemple un voyant lumineux, s'allume. Le conducteur arrête alors son véhicule et, à cet instant, la perche 8 est verticale. Les batteries d'accumulateurs du véhicule 1 commencent à se recharger. Une fois la recharge terminée, la diode rouge située au bout de la perche 8 s'éteint et le générateur haute fréquence est mis en veille. Lorsque le véhicule quitte le boîtier 4, la perche 8 est ramenée à sa position initiale pour couper le générateur haute fréquence. Si nécessaire, le conducteur peut désolidariser le boîtier 4 du sol et emmener celui-ci avec lui à l'aide de la poignée de manutention 4d comme cela ressort notamment de la figure 3 afin de permettre une recharge des batteries d'accumulateurs du véhicule à un autre endroit.

Le dispositif de l'invention permet également la recharge des batteries d'accumulateurs du véhicule qui se sont auto-déchargées au cours d'une longue période de non-utilisation. De plus, le dispositif de l'invention peut être utilisé pour réchauffer l'habitacle du véhicule sans utiliser les batteries d'accumulateurs de celui-ci.

Les nombreux avantages déjà décrits ci-dessus du dispositif de l'invention et découlant de celui-ci comprennent en particulier :
- la facilité d'utilisation puisqu'aucun branchement n'est nécessaire,
- le centrage latéral du véhicule qui est assuré par le feu de guidage et la perche,
- le centrage longitudinal du véhicule sur l'inducteur grâce au témoin du niveau d'énergie captée,
- le boîtier compact et léger,
- la recharge possible des batteries d'accumulateurs même après une absence d'utilisation prolongée,
- l'alimentation des accessoires sur le secteur sans utiliser les batteries d'accumulateurs,
- le refroidissement par convection naturelle (sans ventilateur et sans bruit), et
- la possibilité de verrouiller le boîtier au sol.

## Revendications

1. Dispositif pour recharger les batteries d'accumulateurs d'un véhicule électrique, comprenant un boîtier (4) placé sur le sol enfermant un inducteur (3) relié à un générateur haute fréquence et un récepteur d'énergie (2) fixé au véhicule et pouvant être placé au-dessus de l'inducteur (3) de façon à permettre un transfert d'énergie inductive entre eux, le boîtier (4) enfermant l'inducteur (3) étant portatif, **caractérisé en ce que** le boîtier (4) comprend des moyens de guidage du véhicule (1) pour placer le récepteur (2) au-dessus de l'inducteur (3).

2. Dispositif selon la revendication 1, **caractérisé en ce que** les moyens de guidage comprennent une perche inclinable (8) visible par le conducteur, reliée à un interrupteur (9) du boîtier (4) enfermant l'inducteur (3) et déplaçable, sous la poussée du véhicule, entre une première position dans laquelle l'interrupteur (9) coupe le transfert d'énergie inductive nécessaire pour recharger les batteries et une deuxième position dans laquelle l'interrupteur (9) autorise le transfert d'énergie inductive pour recharger les batteries.

3. Dispositif selon la revendication 2, **caractérisé en ce que** la perche (8) est équipée à son extrémité libre supérieure d'un voyant lumineux (11), tel qu'une diode, pouvant s'allumer lors du basculement de l'interrupteur (9) de la première position à la deuxième position pour faciliter le guidage du véhicule.

4. Dispositif selon la revendication 2 ou 3, **caractérisé en ce que** la perche (8) est démontable.

5. Dispositif selon l'une des revendications 2 à 4, **caractérisé en ce que** les moyens de guidage comprennent également au moins un feu de guidage (12) fixé au boîtier (4) enfermant l'inducteur (3), en avant de la perche de guidage (8).

6. Dispositif selon l'une des revendications précédentes, **caractérisé en ce que** le véhicule (1) comprend un témoin (15), tel qu'un voyant lumineux, indiquant que le degré de recouvrement de l'inducteur (3) et du récepteur (2) est suffisant.

7. Dispositif selon l'une des revendications précédentes, **caractérisé en ce que** le boîtier (4) enfermant l'inducteur (3) est fixé amoviblement sur le sol.

8. Dispositif selon la revendication 7, **caractérisé en ce que** les moyens de fixation du boîtier (4) comprennent une vis (6) s'engageant dans une cheville (7) placée dans le sol et éventuellement un cache antivol (14) solidaire du boîtier (4) et recouvrant la vis de fixation (6).

9. Dispositif selon l'une des revendications précédentes, **caractérisé en ce que** le boîtier (4) enfermant l'inducteur (3) est équipé d'un câble d'alimentation électrique (5) reliant le générateur haute fréquence au secteur d'alimentation.

10. Dispositif selon la revendication 9, **caractérisé en ce que** le boîtier (4) comprend un espace de rangement du câble d'alimentation (5).

11. Dispositif selon l'une des revendications précédentes, **caractérisé en ce que** le boîtier (4) comprend des moyens de refroidissement, tels que des ailettes (13).

## Patentansprüche

1. Vorrichtung zum Nachladen der Akkumulatorenbatterien eines elektrischen Fahrzeugs, mit einem Gehäuse (4), das am Boden platziert einen Induktor (3) umschließt, der mit einem Hochfrequenzgenerator verbunden ist, und einem Energieaufnehmer (2), der am Fahrzeug befestigt ist und so über den Induktor (3) platziert werden kann, dass er zwischen diesen eine Übertragung von Induktionsenergie gestattet, wobei das den Induktor (3) umschließende Gehäuse (4) tragbar ist, **dadurch gekennzeichnet, dass** das Gehäuse (4) Mittel zum Führen des Fahrzeugs (1) enthält, um den Aufnehmer (2) über den Induktor (3) zu platzieren.

2. Vorrichtung nach Anspruch 1, **dadurch gekennzeichnet, dass** die Führungsmittel eine neigbare Stange (8) enthalten, die vom Fahrer ersichtlich ist, mit einem Schalter (9) des den Induktor (3) umschließenden Gehäuses (4) verbunden ist und unter Schieben des Fahrzeugs zwischen einer ersten Stellung, in welcher der Schalter (9) die Übertragung der zum Nachladen der Batterien erforderlichen Induktionsenergie abschaltet, und einer zweiten Stellung verstellbar ist, in welcher der Schalter (9) die Übertragung von Induktionsenergie zum Nachladen der Batterien gestattet.

3. Vorrichtung nach Anspruch 2, **dadurch gekennzeichnet, dass** die Stange (8) an ihrem oberen, freien Ende mit einer Leuchtanzeige (11) versehen ist, wie etwa mit einer Diode, die sich beim Umschalten des Schalters (9) von der ersten Stellung in die zweite Stellung einschalten kann, um das Führen des Fahrzeugs zu erleichtern.

4. Vorrichtung nach Anspruch 2 oder 3, **dadurch gekennzeichnet, dass** die Stange (8) abnehmbar ist.

5. Vorrichtung nach einem der Ansprüche 2 bis 4, **dadurch gekennzeichnet, dass** die Führungsmittel auch zumindest ein Führungslicht (12) enthalten, das am den Induktor (3) umschließenden Gehäuse (4) vor der Führungsstange (8) befestigt ist.

6. Vorrichtung nach einem der vorangehenden Ansprüche, **dadurch gekennzeichnet, dass** das Fahrzeug (1) eine Kontrollleuchte (15) enthält, wie etwa eine Leuchtanzeige, die angibt, dass der Deckungsgrad von Induktor (3) und Aufnehmer (2) ausreichend ist.

7. Vorrichtung nach einem der vorangehenden Ansprüche, **dadurch gekennzeichnet, dass** das den Induktor umschließende Gehäuse (4) abnehmbar am Boden befestigt ist.

8. Vorrichtung nach Anspruch 7, **dadurch gekennzeichnet, dass** die Mittel zum Befestigen des Gehäuses (4) eine Schraube (6) enthalten, die in einem am Boden platzierten Dübel (7) eingreift, sowie gegebenenfalls eine Diebstahlsicherungsabdeckung (14), die fest mit dem Gehäuse (4) verbunden ist und die Befestigungsschraube (6) abdeckt.

9. Vorrichtung nach einem der vorangehenden Ansprüche, **dadurch gekennzeichnet, dass** das den Induktor (3) umschließende Gehäuse (4) mit einem Stromversorgungskabel (5) ausgestattet ist, welches den Hochfrequenzgenerator mit dem Stromnetz verbindet.

10. Vorrichtung nach Anspruch 9, **dadurch gekennzeichnet, dass** das Gehäuse (4) einen Verstauraum für das Versorgungskabel (5) enthält.

11. Vorrichtung nach einem der vorangehenden Ansprüche, **dadurch gekennzeichnet, dass** das Gehäuse (4) Abkühlmittel enthält, wie etwa Kühlrippen (13).

## Claims

1. Device for recharging the accumulator batteries of an electric vehicle, comprising a unit (4) placed on the floor and housing an inductor (3) connected to a high frequency generator and an energy receiver (2) fixed to the vehicle and able to be placed above the inductor (3) in such a way as to allow an inductive transfer of energy between them, the unit (4) housing the inductor (3) being portable, **characterized in that** the unit (4) comprises means of guiding of the vehicle (1) in order to place the receiver (2) above the inductor (3).

2. Device according to Claim 1, **characterized in that** the guiding means comprise an inclinable pole (8), that can be seen by the driver, connected to a switch (9) of the unit (4) housing the inductor (3) and movable, under the thrust of the vehicle, between a first position in which the switch (9) switches off the inductive transfer of energy necessary for recharging the batteries and a second position in which the switch (9) allows the inductive transfer of energy for recharging the batteries.

3. Device according to Claim 2, **characterized in that** the pole (8) is equipped at its free upper end with a luminous indicator lamp (11), such as a diode, able to light up when the switch (9) switches from the first position to the second position in order to facilitate the guiding of the vehicle.

4. Device according to Claim 2 or 3, **characterized in that** the pole (8) is detachable.

5. Device according to one of Claims 2 to 4, **characterized in that** the guiding means also comprise at least one guiding lamp (12) fixed to the unit (4) housing the inductor (3), in front of the guiding rod (8).

6. Device according to one of the preceding claims, **characterized in that** the vehicle (1) comprises an indicator (15), such as a luminous indicator lamp, indicating that the degree of overlapping of the inductor (3) and the receiver (2) is sufficient.

7. Device according to one of the preceding claims, **characterized in that** the unit (4) housing the inductor (3) is fixed in a detachable manner to the floor.

8. Device according to Claim 7, **characterized in that** the means of fixing the unit (4) comprise a screw (6) engaging in a plug (7) placed in the floor and possibly an anti-theft cover (14) integral with the unit (4) and covering the fixing screw.

9. Device according to one of the preceding claims, **characterized in that** the unit (4) housing the inductor (3) is equipped with an electrical power supply cable (5) connecting the high frequency generator to the power supply mains.

10. Device according to Claim 9, **characterized in that** the unit (4) comprises a space for stowing the power supply cable (5).

11. Device according to one of the preceding claims, **characterized in that** the unit (4) comprises cooling means, such as fins (13).
